# EUROPÄISCHE PATENTSCHRIFT

(11) **EP 2 264 445 B1**
(45) Veröffentlichungstag und Bekanntmachung des Hinweises auf die Patenterteilung: **25.01.2017**
(21) Anmeldenummer: 10006194.4
(22) Anmeldetag: 15.06.2010
(51) Int. Cl.: G01N 27/42

(54) **Coulometrischer Feuchtesensor und entsprechendes Verfahren**
Coulometric humidity sensor and corresponding method
Capteur d'humidité coulométrique et procédé correspondent

(30) Priorität: 15.06.2009 DE 102009025325
(43) Veröffentlichungstag der Anmeldung: 22.12.2010
(73) Patentinhaber: Deutsches Zentrum für Luft- und Raumfahrt e.V., 51147 Köln (DE)
(72) Erfinder: Koncz, Alexander, 12459 Berlin (DE); Lorek, Andreas, Dr., 14776 Brandenburg (DE); Wernecke, Ronald, Dr., 15344 Straußberg (DE); Schwanke, Volker, 14532 Stahnsdorf (DE)
(74) Vertreter: Patentanwälte Bressel und Partner mbB

(56) Entgegenhaltungen:
- EP-A1- 0 907 085
- DE-A1- 3 043 341
- DE-A1- 3 140 446
- US-A- 2 285 421
- US-A- 2 684 592
- US-A- 2 756 295
- US-A- 3 255 413
- US-A- 3 926 745
- F.A. KEIDEL: "Determination of Water by Direct Amperometric Measurement" ANALYTICAL CHEMISTRY, Bd. 31, Nr. 12, 12. Dezember 1959 (1959-12-12), Seiten 2043-2048, XP002600985

## Beschreibung

Die Erfindung betrifft eine coulometrische Feuchtemesseinrichtung und ein Verfahren zum Messen einer Feuchte mit Hilfe eines coulometrischen Verfahrens.

Die Feuchtigkeit in Gasen ist heutzutage ein wichtiger Analyseparameter in der Prozessindustrie, bei Gasherstellern, bei Gasversorgem und in der Halbleiterindustrie.

Darüber hinaus ist die Feuchtigkeit bei der extraterrestrischen Forschung, insbesondere bei der Planetenforschung, von großem Interesse. Bereits geringe Mengen an Feuchtigkeit können beispielsweise Herstellungsverfahren In der Halbleiterindustrie negativ beeinflussen. Daher besteht ein großer Bedarf, die Spurenfeuchte in Gasen exakt bestimmen zu können.

Aus der DE 30 43 341 A1 ist ein Verfahren zur Herstellung eines Feuchtedetektors bekannt, der ein Aluminiumoxidsubstrat enthält, auf dem ein Elektrodensystem angebracht ist, das aus einem Edelmetallelektrodenpaar besteht, die durch eine elektrisch leitende feuchtigkeitsempfindliche auf dem Substrat vorhandene Schicht elektrisch leitend verbunden sind, wobei vorgesehen ist, dass zunächst das Elektrodensystem auf dem Aluminiumoxidsubstrat gebildet wird; dass dann das ausgesetzte Aluminumoxid dadurch aktiviert wird, dass das mit dem Elektrodensystem versehene

Aluminiumoxidsubstrat auf eine Temperatur zwischen 100 und 750°C während 30 Stunden bis eine halbe Stunde erhitzt wird; dass danach ein Überzug aus Orthophosphorsäure oder Phosphorpentoxid über das mit der elektrisch leitenden feuchtigkeitsempfindlichen Schicht zu versehende Substrat aufgebracht wird, und dass anschließend das Substrat, das Elektrodensystem und der Überzug auf 50 bis 500°C während 30 Stunden bis eine halbe Stunde erhitzt werden, damit die elektrisch leitende feuchtigkeitsempfindliche Schicht durch eine Reaktion zwischen dem Aluminuimoxid und der Orthophosphorsäure oder dem Phosphorpentoxid gebildet wird. Dieser trockene Feuchtedetektor kann in Anordnungen, wie akustischen Oberflächenwellenanordnungen, eingesetzt werden.

Um genaue Feuchtemessungen auszuführen, werden coulometrischen Verfahren eingesetzt. Bei einem solchen Verfahren werden Wassermoleküle an einem selbst im Wesentlichen nicht leitfähigen hygroskopischen Material absorbiert. Über zwei getrennt voneinander ausgebildete Elektroden, die in Kontakt mit dem hygroskopischen Material angeordnet sind, wird eine Spannung angelegt. Hierdurch wird eine elektrolytische Dissoziation der Wassermoleküle ausgelöst. Aufgrund der Dissoziation kommt es zu einem Stromfluss, der proportional zu der Anzahl der dissoziierten Moleküle ist. Über eine Strommessung wird die Anzahl der bei der Dissoziation erzeugten Ladungsträger gemessen. Der gemessene Strom ist somit proportional zu der Anzahl der absorbierten Moleküle.

Die bauliche Einheit, die das hygroskopische Material mit den darauf in Kontakt mit dem hygroskopischen Material angeordneten Elektroden umfasst, wird hier als Spurenfeuchtesensor oder verkürzt als Sensor bezeichnet.

Eine Vorrichtung oder Anordnung, in der ein oder mehrere Spurenfeuchtesensoren zur Feuchtemessung eingesetzt werden oder einsetzbar sind, wird hier als Spurenfeuchtemesseinrichtung bezeichnet.

Die für besonders empfindliche Messungen eingesetzten coulometrischen Spurenfeuchtesensoren werden mit einer konstanten Gleichspannung betrieben. Das coulometrische Messverfahren stellt ein absolutes Messverfahren. Der durch den coulometrischen Spurenfeuchtesensor fließende elektrische Strom ist ein Maß für die Spurenfeuchte in der Messprobe. Der Spurenfeuchtesensor kann bei konstanter Messspannung als ohmscher Widerstand angesehen werden, dessen Widerstandswert in Abhängigkeit des Feuchtegehalts der Messprobe veränderlich ist. Für Messungen in sehr tiefen Messbereichen, d.h. bei tiefen Temperaturen und/oder geringen Taupunkten, wird an einem coulometrischen Sensor ein sehr geringer Strom als Messsignal generiert. Die hierbei erzeugten Ströme liegen unter 100 nA.

Das coulometrische Messprinzip wurde ursprünglich von Keidel entwickelt und ist in dem Artikel "Determination of Water by Direct Amperometric Measurement" in Journal Anal. Chem. 31 (1959), S. 2043-2048 beschrieben. Das dort beschriebene Messsystem besteht aus einem Sensor, der sich in einer Messzelle befindet, einem Massenflussregler, einer Gleichspannungsquelle und einem Strommessgerät. Durch den Massenflussregler wird ein definierter Volumenstrom über den Sensor geleitet. Der Sensor besteht aus einem Substrat, z.B. Glas oder Keramik, auf dem sich zwei Elektroden, im Allgemeinen aus Platin, befinden. Zwischen den Elektroden in Kontakt mit diesen ist ein hygroskopisches Material angeordnet, welches vorzugsweise Phosphorpentoxid (P₂O₅) ist. Dieses absorbiert Wasser. Durch eine an den Elektroden anliegende Gleichspannung wird das absorbierte Wasser elektrolysiert und es entsteht ein dem absorbierten Wasser proportionaler Strom. Ein solches Messsystem wird häufig im Bypass betrieben, wie dies beispielsweise von R. Wernecke "Industrielle Feuchtemessung - Grundlagen, Messmethoden, technische Anwendungen" Weinheim: Wiley-VCH GmbH & Co. KGaA. 2003-567 S. - ISBN 3-527-30285-9 auf Seite 118 und Seiten 307 und folgende beschrieben ist. Alternativ wird das über den Sensor geführte Messgas gegen die Atmosphäre abgeblasen.

Aus der DE 31 40 446 A1 ist ein Feuchtefühler bekannt, der einen erweiterten Impedanzbereich aufweist und eine geringere Empfindlichkeit gegenüber Störsignalen besitzt. Der Fühler umfasst eine innere leitende Schicht und eine äußere leitende Schicht auf einem isolierenden Substrat hoher Reinheit, wobei sich ein Ringspalt zwischen den Schichten befindet. Eine dünne feuchtigkeitsempfindliche Schicht hoher Impedanz deckt den Ringspalt ab und erstreckt sich auf die innere und die äußere Schicht. Der Sensor weißt eine feuchtigkeitsabhängige Impedanz auf, die bei der Feuchtemessung ausgewertet wird.

Aus der US 3,926,745 ist eine Vorrichtung zum Abscheiden von P₂O₅ auf einem nicht leitenden Substrat zwischen zwei Elektroden beschrieben, um elektrolytische Zellen herzustellen. Hierfür wird gasförmiges Phosphor in der Gegenwart von Wasser über das Substrat geführt, während ein Potential zwischen den Elektroden aufrecht erhalten wird.

Insbesondere bei hohen Elektrolyseströmen, d.h. bei einer hohen Spurenfeuchte, tritt eine Zerstörung des coulometrischen Spurenfeuchtesensors aufgrund einer so genannten Elektromigration auf. Dabei wandern bei hohen Stromdichten, d.h. hohen Feuchten, die Elektrodenpartikel von einer Elektrode zu der anderen Elektrode, was zu Kurzschlüssen und damit zu einer Verringerung der Lebensdauer führt. Verstärkt tritt die Migration bei der Messung im oberen Spurenfeuchtebereich auf, d.h. bei einem Frostpunkt oberhalb von -40°C.

Der Erfindung liegt somit die technische Problemstellung zugrunde, eine Spurenfeuchtemesseinrichtung zu schaffen, die eine verbesserte Haltbarkeit aufweist, und ein coulometrisches Messverfahren zu schaffen, welches materialschonender für Spurenfeuchtesensoren ist.

Die Aufgabe wird erfindungsgemäß durch eine Spurenfeuchtemesseinrichtung mit den Merkmalen des Patentanspruchs 1 sowie ein Verfahren zum Messen einer Spurenfeuchte mit den Merkmalen des Patentspruchs 9 gelöst. Vorteilhafte Ausgestaltungen der Erfindung ergeben sich aus den Unteransprüchen.

Zur Lösung des technischen Problems wird eine Spurenfeuchtemesseinrichtung vorgeschlagen, welche eine Spannungsquelle, einen Spurenfeuchtesensor, der mindestens zwei voneinander getrennt ausgebildete Elektroden, die mit einem hygroskopischen Material in Kontakt sind, umfasst, und eine Strommesseinrichtung, wobei die mindestens zwei Elektroden mit der Spannungsquelle verbunden sind, um eine Spannung zwischen den beiden Elektroden anzulegen, so dass sich in dem hygroskopischen Material ein elektrisches Potential aufbaut und an dem hygroskopischen Material absorbierte Wassermoleküle elektrolytisch dissoziiert werden und hierüber einen Stromkreis schließen, wobei eine Strommesseinrichtung in den Stromkreis so integriert ist, dass der durch die elektrolytische Dissoziation bewirkte elektrische Strom gemessen wird. "In den Stromkreis so integriert ist, dass der durch die elektrolytische Dissoziation bewirkte elektrische Strom gemessen wird", bedeutet, dass der gesamte durch die Dissoziation bewirkte Strom durch die Strommesseinrichtung fließt. Zur Lösung des technischen Problems ist ein Betreiben des Spurenfeuchtesensors zeitlich abwechselnd mit entgegengesetzter Polarität der Spannung vorgesehen. Dafür ist eine Umpoleinrichtung vorgesehen, die eine Polarität der an den Elektroden angelegten Spannung zeitlich variiert, wobei die Polarität abhängig von der gemessenen Stromstärke zeitlich variiert wird.

Als Umpoleinrichtung wird jede Vorrichtung oder Einheit angesehen, die gemeinsam mit einer Spannungsquelle zu unterschiedlichen Zeiten eine Spannung mit entgegengesetzter Polarität bereitstellt. Durch die Umpolung der anliegenden Spannung wird die Elektromigration unterdrückt und/oder sogar teilweise rückgängig gemacht. Da für die Migration eine Kraft, die durch das elektrische Feld bedingt ist, über einen längeren Zeitraum wirken muss, ist es vorteilhaft, die Feldrichtung, die durch die Polarität der Spannung vorgegeben ist, zeitlich zu variieren. Durch die Unterdrückung der Elektromigration wird die Haltbarkeit der Elektroden und hierüber eine Lebensdauer bzw. Standzeit zwischen zwei Wartungsintervallen des Spurenfeuchtesensors und hierüber der Spurenfeuchtemesseinrichtung erhöht. Der Sensor weist in Abhängigkeit von der Feuchte ein Gleichgewicht zwischen der flüssigen Phosphorsäure über den Elektroden, und dem durch die Elektrolyse gebildeten Phosphorpentoxid auf, sofern eine Spannung zwischen den Elektroden angelegt ist. Somit ist auf dem Sensor ständig Phosphorsäure vorhanden. Ein weiterer wesentlicher Vorteil der Erfindung liegt darin, dass ein mit Spannungsumpolung betriebener Spurenfeuchtesensor gegenüber den mit Gleichstrom betriebenen Sensoren eine zeitlich unveränderliche feste Kennlinie aufweist. Bei den mit Gleichstrom betriebenen Sensoren aus dem Stand der Technik tritt hingegen eine zeitliche Drift der Kennlinie auf. Dieses bedeutet, dass demselben Stromwert im Stand der Technik zu unterschiedlichen Zeitpunkten im Messbetrieb nicht dieselbe Spurenfeuchte zugeordnet werden kann. Bei den hier vorgeschlagenen Gegenständen erhält man hingegen eine Kennlinie, die über die gesamte verlängerte Messzeit unverändert bleibt. Somit sind höhere Messgenauigkeiten zu erzielen.

Vorteilhafterweise werden bei der Herstellung eines Spurenfeuchtesensors zunächst die Elektroden, die in der Regel aus Platin sind, auf einem inerten und nicht leitfähigen Trägermaterial, vorzugsweise einer Keramik, beispielsweise Al₂O_{3,} aufgebracht. Anschließend wird das hygroskopische Material aufgebracht, so dass die Elektroden über das hygroskopische Material verbunden werden. Das Aufbringen kann beispielsweise über ein Aufbringen von Phosphorsäuren erfolgen. Da eine Elektromigration an Platinelektroden, die mit einer so genannten Dickschichttechnik oder einer Dünnschichttechnik auf das inerte Trägermaterial aufgebracht und/oder auf diesem ausgebildet sind, größer als an Elektroden ist, die aus einem Vollmaterial über ein Ziehen ausgebildet sind, war es bisher nicht möglich, bei den Spurenfeuchtesensoren gemäß dem Stand der Technik die Elektroden in Dünn- oder Dickschichttechnik auszubilden, sofern eine hohe Standzeit bzw. eine hohe Lebensdauer angestrebt war. Die Verringerung oder gänzliche Vermeidung der Elektromigration gemäß der Erfindung ermöglicht es somit, dass diese modernen Fertigungstechnologien zur Herstellung der Elektroden verwendet werden können, ohne eine Einbuße im Hinblick auf eine Standzeit und/oder Lebensdauer hinnehmen zu müssen. Da diese modernen Fertigungstechniken eine höhere Variabilität hinsichtlich einer Ausgestaltung der geometrischen Formen der Elektroden ermöglichen, wird ein Designspielraum hinsichtlich der Herstellung von Spurenfeuchtesensoren durch die Erfindung deutlich erhöht. Darüber hinaus werden die Fertigungskosten für die Spurenfeuchtesensoren und hierüber die der Spurenfeuchtemesseinrichtungen deutlich gesenkt.

Bei der Erfindung ist die Steuereinrichtung so ausgebildet, dass die Polarität der angelegten Spannung zeitlich periodisch variiert wird. Hierdurch kann sichergestellt werden, dass die entgegengesetzt wirkenden Kräfte aufgrund der entgegengesetzten Polarität jeweils für dieselbe Zeitspanne im Bereich zwischen den Elektroden wirken.
Die halbe Perlodenlänge wird dabei bei einer bevorzugten Ausführungsform größer, vorzugsweise mehr als eine Größenordnung größer als eine maximale Einschwingzeit der Strommesseinrichtung bzw. der Spurenfeuchtemesseinrichtung bei konstanter Spurenfeuchte gewählt. Somit wird sichergestellt, dass die Spurenfeuchtemesseinrichtung jeweils nach dem Umpolen der Polarität in einen Messzustand gelangt, der hochpräzise exakte Spurenfeuchtewerte anhand des gemessenen Stroms ermittelt.

Bei einer bevorzugten Weiterbildung der Erfindung werden zwei Spurenfeuchtemesssensoren in der Weise betrieben, dass die Variation der Polarität an den beiden Spurenfeuchtesensoren zeitlich versetzt vorgenommen wird, wobei der zeitliche Versatz größer als die maximale Einschwingzeit der Strommessung bei konstanter Spurenfeuchte ist. Hierdurch wird durch die Messanordnung gewährleistet, dass jeweils der Dissoziationsstrom, der durch einen der Spurenfeuchtesensoren fließt, zur Ableitung exakter Spurenfeuchtewerte geeignet ist. Bei einer Ausführungsform werden somit mehrere Elektroden getrennt voneinander paarweise auf hygroskopischem Material ausgebildet, wobei die Elektroden so angeordnet sind, dass jeweils zwischen den Elektroden eines jeden Elektrodenpaars ein elektrisches Feld ausgebildet werden kann, welches eine Potentialdifferenz zwischen den Elektroden eines der anderen Elektrodenpaare unverändert oder nahezu unverändert lässt. Die Polaritäten der jeweils an verschiedenen Elektrodenpaaren angelegten Spannungen werden verändert, d. h. die Spannungen werden zeitversetzt umgepolt. Bei einigen Ausführungsformen werden zwei Elektrodenpaare ausgebildet, die auf demselben hygroskopischen Material angeordnet sind, wobei das hygroskopische Material auf einem Träger oder auf getrennt ausgebildeten Trägern aufgebracht sein kann. Die Elektrodenpaare bilden jeweils einen Spurenfeuchtesensor.

Die Periodenlänge für die Umpolung bzw. den Wechsel der Polarität wird im Bereich von 1 Sekunde bis 1 Tag, vorzugsweise im Bereich von 5 Sekunden bis 1 Stunde und am bevorzugtesten im Bereich von 15 Sekunden bis 30 Sekunden gewählt.

Ebenfalls ist eine Periodenlänge vorzugsweise im Bereich von 1 Minute bis 1 Stunde und am bevorzugtesten ein Bereich von 5 Minuten bis 20 Minuten möglich.

Um systematische Fehler bei der Spurenfeuchtemessung weiter zu reduzieren, ist bei einer anderen Ausführungsform vorgesehen, dass eine Zeitspanne eines Polaritätsumpolungszyklusses variiert, beispielsweise zufällig variiert, wird. Als ein Polarisationszyklus wird ein Messzyklus angesehen, in dem zunächst die erste Polarität zwischen den mindestens zwei Elektroden und anschließend die umgekehrte Polarität der Spannung an die Elektroden angelegt werden. Hierbei wird selbstverständlich darauf geachtet, dass die Zeitspanne zwischen zwei Polaritätswechsel größer als eine Einschwingzeit des Spurenfeuchtesensors bzw. der Strommesseinrichtung, d.h. der Spurenfeuchtemesseinrichtung, ist.
Die Elektromigration ist von der Größe des elektrolytischen Dissoziationsstroms abhängig. Daher wird die Zeitspanne zwischen zwei Umpolungen abhängig von dem gemessenen Dissoziationsstrom variiert. Somit wird die Polarität abhängig von der gemessenen Stromstärke zeitlich variiert. Vorzugsweise wird ein zeitlicher Abstand zwischen zwei Polaritätswechseln kürzer gewählt wird, je größer die gemessene Stromstärke ist und umgekehrt..

Da die Elektromigration insbesondere bei hohen Feuchten, d.h. hohen elektrolytischen Strömen, auftritt, sieht eine Weiterbildung der Erfindung vor, dass die Elektroden und das hygroskopische Material von einem abgeschlossenen Behältnis umschlossen werden bzw. sind, wobei das Behältnis mindestens eine Fläche aufweist, die als Membran ausgebildet ist und eine Diffusion von Wassermolekülen in das Behältnis zulässt.

Bei einer solchen Ausführungsform wird die Menge des von dem hygroskopischen Material absorbierten Wassers deutlich reduziert, da nur ein Teil des Wassers durch die Membran diffundiert. Eine Diffusionsgeschwindigkeit ist durch einen Konzentrationsgradienten, der von einer Konzentration des Wassers außerhalb des Behältnisses und der Konzentration innerhalb des Behältnisses abhängig ist, bestimmt. Bei geeigneter Ausgestaltung der Membran ist die Diffusionsrate proportional zu dem Konzentrationsgefälle. Das hygroskopische Material wird vorzugsweise so gewählt, dass sämtliches durch die Membran diffundiertes Wasser mehr oder weniger instantan durch das hygroskopische Material absorbiert wird. Somit ist die Diffusionsrate dann nur von der Konzentration des Wassers, d.h. der Spurenfeuchte, außerhalb des Behältnisses abhängig. Ferner hat es sich gezeigt, dass der Spurenfeuchtesensor hierdurch unabhängig von einem Massendurchfluss durch eine Messzelle wird, in der der Spurenfeuchtesensor angeordnet Ist.

Die mit wechselnder Polarität der Spannung betriebenen Spurenfeuchtesensoren weisen darüber hinaus den Vorteil auf, dass diese, sofern eine Elektromigration aufgetreten ist und dazugeführt hat, dass es auf Grund einer Verunreinigung der Phosphorsäure auf den Elektroden ein Weiterbetrieb nicht möglich ist, der Spurenfeuchtesensor einfach gereinigt werden kann. Die Verunreinigungen lassen sich mit Wasser von den Elektroden entfernen. Durch ein Aufbringen von beispielsweise 85 %er Phosphorsäure, die mit Azeton gemischt Ist, lässt sich der Spurenfeuchtesensor wieder in einen funktionsfähigen Zustand versetzten. Das Azeton wird vor der erneuten Inbetriebnahme verdampft. Durch ein Anlegen einer Spannung wird aus der Phosphorsäure erneut Phosphorpentoxid gebildet. In Abhängigkeit von der Feuchte stellt sich somit ein Gleichgewicht zwischen Phosphorsäure und Phosphorpentoxid ein. Der hier vorgeschlagene Sensor kann somit regeneriert werden, was im Unterschied hierzu bei dem aus der DE 30 43 341 A1 bekannten Sensor nicht möglich ist, der eine Schicht aufweist, die nicht erneuert werden kann, da Sie in die Oberfläche eingebrannt ist. Daher sind die hier beschriebenen Sensoren wieder verwendbar, wohingegen solche gemäß der DE 30 43 341 A1 vollständig ersetzt werden müssen.

Die Merkmale des erfindungsgemäßen Verfahrens weisen dieselben Vorteile wie die entsprechen Merkmale des erfindungsgemäßen Spurenfeuchtesensors auf.

Nachfolgend wir die Erfindung unter Bezugnahme auf eine Zeichnung näher erläutert Hierbei zeigen:
- Fig. 1: eine schematische Darstellung einer ersten Ausführungsform einer Spurenfeuchtemesseinrichtung;
- Fig. 2: eine zweite Ausführungsform einer coulometrischen Spurenfeuchtemesseinrichtung;
- Fig. 3: eine schematische Darstellung der Ober dem Spurenfeuchtesensor abfallenden Spannung aufgetragen gegen die Zeit;
- Fig. 4: eine schematische grafische Darstellung des Absolutbetrags des gemessenen Stroms aufgetragen gegen die Zeit;
- Fig. 5: eine weitere schematische Darstellung einer Spurenfeuchtemesseinrichtung; und
- Fig. 6: eine schematische grafische Darstellung der an den einzelnen Spurenfeuchtesensoren der Spurenfeuchtemesseinrichtung nach Fig. 5 abfallenden Spannungen aufgetragen gegen die Zeit.

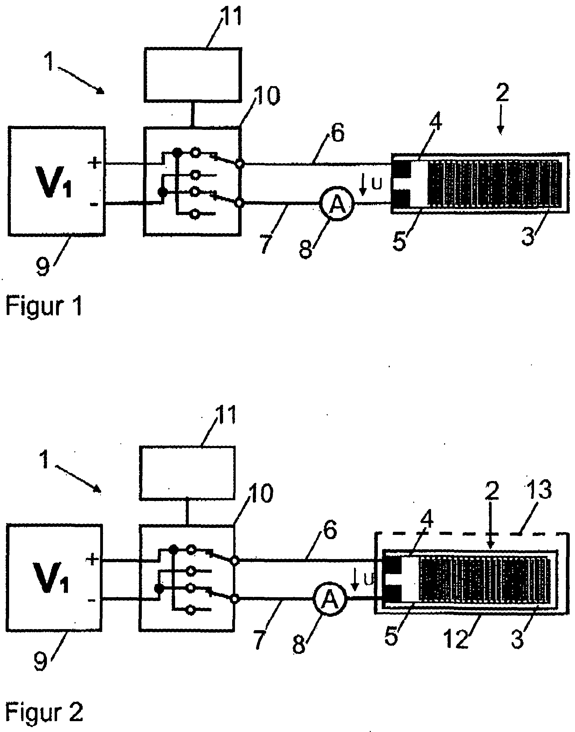

In Fig. 1 ist eine Spurenfeuchtemesseinrichtung 1 schematisch dargestellt. Die Spurenfeuchtemesseinrichtung 1 nach Fig. 1 umfasst einen coulometrischen Spurenfeuchtesensor 2. Der coulometrische Spurenfeuchtesensor 2 umfasst ein stark hygroskopisches Material 3, welches selbst nicht leitend oder im Wesentlichen nicht leitend ist. Das hygroskopische Material 3 ist beispielsweise Phosphorpentoxid (P₂O₅). Es können jedoch auch andere hygroskopische Materialien verwendet werden. Auf dem hygroskopischen Material 3 bzw. in Kontakt mit dem hygroskopischen Material 3 sind zwei voneinander getrennt ausgebildete Elektroden 4, 5 angeordnet, die in der dargestellten Ausführungsform kammartig ausgebildet sind und ineinandergreifen. Die Elektroden sind bevorzugt aus Platin hergestellt. Über Zuleitungen 6, 7 kann an den coulometrischen Spurenfeuchtesensor 2 eine Spannung angelegt werden. Von dem hygroskopischen Material 3 absorbierte Wassermoleküle werden bei anliegender Spannung dissoziiert. Hierdurch entsteht ein elektrolytischer Strom. Eine Strommesseinrichtung 8, die in der Zuleitung 7 angeordnet ist, misst diesen elektrolytischen Strom, der bei konstanter Spannung, d.h. konstantem Spannungsabfall zwischen den Elektroden 4, 5 proportional zu der Anzahl der dissoziierten Wassermoleküle ist. Das Messsignal der Strommesseinrichtung 8 ist somit ein Maß für die Spurenfeuchte, vorausgesetzt die angelegte Spannung wird konstant gehalten. Der coulometrische Spurenfeuchtesensor 2 verhält sich bei konstant gehaltener Spannung wie ein ohmscher Widerstand, der von der Feuchte in der Umgebung des coulometrischen Spurenfeuchtesensors 2 abhängig ist.

Die über die Zuleitungen 6, 7 an die Elektroden 4, 5 angelegte Spannung wird von einer Spannungsquelle 9 zur Verfügung gestellt. Diese ist mit den Zuleitungen 6, 7 über eine Umpoleinrichtung 10 verbunden. Bei hohen Spurenfeuchten in der Umgebung des coulometrischen Spurenfeuchtesensors 2, beispielsweise oberhalb eines Frostpunktes von -40°C, treten elektrolytische Ströme auf, die zu einer Elektromigration des Elektrodenmaterials der Elektroden 4, 5 führen, wenn die Polarität der angelegten Spannung nicht variiert wird. Die Umpoleinrichtung 10, die mit einer Steuereinrichtung 11 verbunden ist, ist so ausgebildet, dass diese die Polarität der über die Zuleitungen 6, 7 an den coulometrischen Spurenfeuchtesensor 2 angelegten Spannung umpolen, d.h. variieren kann. Die Umpolung wird durch die Steuereinrichtung 11 zeitlich gesteuert.

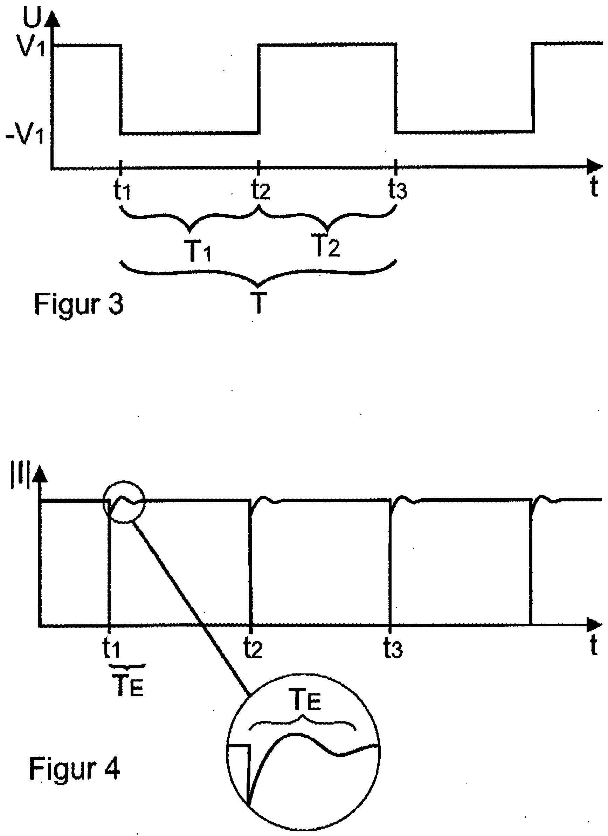

Exemplarisch ist dies in Fig. 3 dargestellt. In Fig. 3 ist schematisch die über dem coulometrischen Spurenfeuchtesensor abfallende Spannung U grafisch gegen die Zeit aufgetragen. Die Ordinate gibt hierbei die abfallende Spannung U in beliebigen Einheiten an. Die Abszisse ist die Zeitachse. In dem dargestellten Ausführungsbeispiel wird die Polarität periodisch mit einer Periodendauer T umgeschaltet. Die Umpolung erfolgt an den Zeitpunkten t₁, t₂, t₃,... Eine halbe Periodendauer, T₁, T₂, wird hierbei so gewählt, dass diese langer als eine maximale Einschwingzeit der Messeinrichtung bei Konstanter Spurenfeuchte ist.

In Fig. 4 ist der gemessene Dissoziationsstrom an der Strommesseinrichtung 8 nach Fig. 1 schematisch gegen die Zeit aufgetragen. Aufgetragen ist der Absolutbetrag des gemessenen Stroms. Zu erkennen ist, dass an den Zeitpunkten t₁, t₂, t₃ die Polarität gewechselt wird, wie dies in Fig. 3 dargestellt ist. Im Moment der Umpolung kommt es zwangsläufig zu einem Absinken des Stroms, da die Stromrichtung aufgrund der Änderung der Polarität der angelegten Spannung geändert wird. Da es für hochpräzise Messungen notwendig ist, dass die Spannung konstant ist, gibt es in dem Messsignal unmittelbar nach einer Umpolung eine so genannte Einschwingphase T_{E}, bis sich der gemessene Dissoziationsstrom wieder einem konstanten Wert angenähert hat. Die Einschwingzeit wird ebenfalls durch eine gegebenenfalls vorhandene Spannungsstabilisierung und/oder eine Regelung in der Messschaltung der Strommesseinrichtung 8 beeinflusst. In dem vergrößert dargestellten Ausschnitt ist der Einschwingvorgang lediglich schematisch dargestellt und erhebt nicht den Anspruch, einen tatsächlichen Verlauf der Stromkurve wiederzugeben.

Aufgrund der periodischen Umpolung, wie dies in Fig. 3 dargestellt ist, kann eine Elektromigration verringert oder vollständig vermieden werden. Hierdurch wird eine Standzeit einer Spurenfeuchtemesseinrichtung deutlich erhöht. Wird die Perlodenlänge T so gewählt, dass die Halbperiodenlänge T1, T2 (= T/2) wesentlich länger als die Einschwingzeit T_{E} ist, so sind die Zeitspannen, die nicht für eine zuverlässige Messung zur Verfügung stehen, klein im Verhältnis zur gesamten Messdauer bei angenommenem Dauerbetrieb.

Da die Elektromigration insbesondere von der Größe des elektrolytischen Stroms, der durch den Spurenfeuchtesensor fließt, abhängig ist, ist es vorteilhaft, die Menge des zur Absorption zur Verfügung stehenden Wasserdampfs gegebenenfalls zu verringern, insbesondere wenn hohe Spurenfeuchten gemessen werden sollen. Bei der Ausführungsform nach Fig. 2 ist der coulometrischen Spurenfeuchtesensor 2 daher von einem Behältnis 12 vollständig umschlossen. Das Behältnis 12 weist jedoch mindestens eine Fläche auf, die als Membran 13 ausgebildet ist, durch welche Wassermoleküle diffundieren können. Vorzugsweise ist die Membran 13 aus Polytetrafluorethylen hergestellt. Durch die Ausgestaltung der Membran 13 kann die Menge der diffundierenden Wassermoleküle bei vorgegebenem Konzentrationsgradienten angepasst werden. Dies bedeutet, dass durch die Ausgestaltung der Membran 13 die Menge der Wassermoleküle festgelegt werden kann, die bei einer gegebenen Spurenfeuchte durch die als Membran 13 ausgebildete Barriere diffundieren. Hierbei ist davon auszugehen, dass die in das Behältnis diffundierenden Wassermoleküle dort nahezu instantan von dem hygroskopischen Material 3 absorbiert werden und anschließend elektrolytisch dissoziiert werden. Somit ist der Konzentrationsgradient nur von der Konzentration der Wassermoleküle außerhalb des Behältnisses abhängig.

Es hat sich gezeigt, dass Spurenfeuchtemesseinrichtungen, bei denen der Spurenfeuchtemesssensor von einem Behältnis mit einer solchen Diffusionsbarriere umschlossen ist, in nahezu beliebigen Messzellen eingesetzt werden kann und nahezu unabhängig von dem Massenstrom ist, der durch die Messzelle geführt wird.

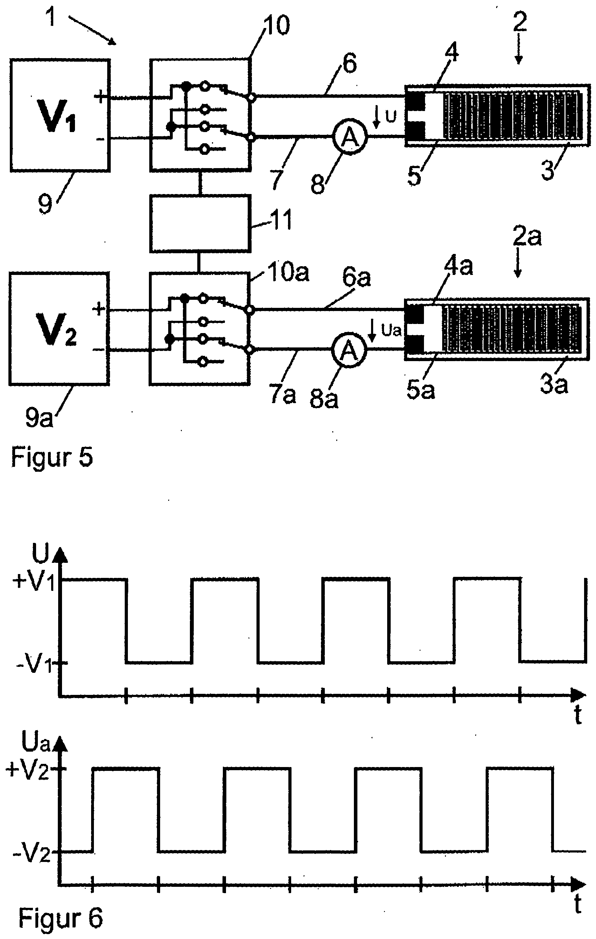

In Fig. 5 ist eine weitere Ausführungsform einer Spurenfeuchtemesseinrichtung 1 dargestellt. Diese umfasst zwei coulometrische Spurenfeuchtesensoren 2, 2a sowie zwei Umpoleinrichtungen 10, 10a und zwei Spannungsquellen 9, 9a. Die Umpolvorrichtungen 10, 10a sind mit einer Steuereinrichtung verbunden. Diese ist so ausgebildet, dass die Umpoleinrichtungen 10,10a zu unterschiedlichen Zeiten jeweils die Polarität der Spannung ändern, die an den zugehörigen Spurenfeuchtesensor 2 bzw. 2a angelegt ist. Ein mögliches Umpol- oder Schaltschema ist schematisch in Fig. 6 dargestellt. Dort sind die an den coulometrischen Spurenfeuchtesensoren 2, 2a abfallenden Spannungen U bzw. Ua schematisch gegen die Zeit grafisch aufgetragen. Gut zu erkennen ist, dass die Polarität der an den beiden coulometrischen Spurenfeuchtesensoren 2, 2a anliegenden Spannungen zu unterschiedlichen Zeiten umgepolt werden. Somit steht immer ein Spurenfeuchtesensor zur Messung der Feuchte bereit. Mit einer solchen Anordnung kann auch der Ausfall eines Spurenfeuchtesensors zuverlässig erkannt werden, da dieser dann abweichende oder gar keine Werte für die ermittelte Feuchte liefert.

Es versteht sich für den Fachmann, dass lediglich beispielhafte Ausführungsformen beschrieben sind. Die Änderung der Polarität kann auf beliebige Weise herbeigeführt werden. Die Umpoleinrichtung kann beispielsweise als eine Umschalteinrichtung ausgebildet sein. Die Änderung der Polarität muss nicht abrupt erfolgen. Jedoch muss die Spannung jeweils über einen ausreichenden Zeitbereich in jedem Halbzyklus konstant gehalten werden, um eine präzise Messung der Spurenfeuchte ausführen zu können. Die Spannungsquellen können beliebige Spannungsquellen, beispielsweise Batterien sein. In der Regel stellt jedoch die Strommesseinrichtung mit der Spannungsquelle eine Schaltung dar, die mindestens eine geregelte Komponente umfasst. Diese Regelung beeinflusst auch den Einschwingvorgang nach einer Änderung der Polarität. Eine Abgrenzung zwischen Strommesseinrichtung und Spannungsquelle und/oder Umpoleinrichtung ist manchen Fällen schwierig. Entscheidend ist jedoch, dass eine elektrische Spannung bereitgestellt wird und der durch den Spurenfeuchtesensor fließende Strom möglichst exakt ermittelbar ist.

### Bezugszeichenliste

- 1: Spurenfeuchtemesseinrichtung
- 2, 2a: coulometrischer Spurenfeuchtesensor
- 3, 3a: hygroskopisches Material
- 4, 4a, 5, 5a: Elektroden
- 6, 6a, 7, 7a: Zuleitungen
- 8, 8a: Strommesseinrichtung
- 9, 9a: Spannungsquelle
- 10: Umpoleinrichtung
- 11: Steuereinrichtung
- 12: Behältnis
- 13: Membran

## Patentansprüche

1. Spurenfeuchtemesseinrichtung (1) umfassend:
eine Spannungsquelle (9),
einen Spurenfeuchtesensor (2), der mindestens zwei voneinander getrennt ausgebildete Elektroden (4, 5), die mit einem hygroskopischen Material (3) in Kontakt sind, umfasst, eine Strommesseinrichtung (8), eine mit der Spannungsquelle (9) verbundene Umpoleinrichtung (10), über die jeweils eine Polarität der an die Elektroden (4,5) angelegten Spannung zeitlich variierbar ist oder variiert ist, und eine Steuereinrichtung (11),
wobei die mindestens zwei Elektroden (4, 5) des Spurenfeuchtesensors (2) mit der Spannungsquelle (9) verbunden sind, um eine Spannung zwischen den beiden Elektroden (4, 5) anzulegen, so dass sich in dem hygroskopischen Material (3) ein elektrisches Potential aufbaut und an dem hygroskopischen Material (3) absorbierte Wassermoleküle elektrolytisch dissoziiert werden und hierüber einen Stromkreis schließen, wobei die Strommesseinrichtung (8) zum Messen des durch die elektrolytische Dissoziation bewirkten elektrischen Stroms in dem Stromkreis angeordnet ist,
**dadurch gekennzeichnet, dass**
die Steuereinrichtung (11) ausgebildet ist, die Umpoleinrichtung (10) derart zu steuern, dass die Polarität abhängig von der gemessenen Stromstärke zeitlich variiert wird.

2. Spurenfeuchtemesseinrichtung (1) nach Anspruch 1, **dadurch gekennzeichnet, dass** die Steuereinrichtung ausgebildet ist,
die Polarität zeitlich periodisch zu variieren, wobei eine Dauer einer Periode der periodischen Variation als eine Periodenlänge bezeichnet ist.

3. Spurenfeuchtemesseinrichtung (1) nach Anspruch 2, **dadurch gekennzeichnet, dass** eine halbe Periodenlänge größer als eine maximale Einschwingzeit der Strommesseinrichtung (8) bei konstanter Spurenfeuchte ist.

4. Spurenfeuchtemesseinrichtung (1) nach einem der vorangehenden Ansprüche 2 oder 3, **dadurch gekennzeichnet, dass** die Periodenlänge im Bereich von 1s bis 1 Tag liegt.

5. Spurenfeuchtemesseinrichtung (1) nach einem der vorangehenden Ansprüche 2 bis 4, **dadurch gekennzeichnet, dass** die Periodenlänge im Bereich von 1 Minute bis 1 Stunde liegt.

6. Spurenfeuchtemesseinrichtung (1) nach einem der vorangehenden Ansprüche 2 bis 5, **dadurch gekennzeichnet, dass** die Periodenlänge im Bereich von 5 Minuten bis 20 Minuten liegt.

7. Spurenfeuchtemesseinrichtung (1) nach einem der vorangehenden Ansprüche, **dadurch gekennzeichnet, dass** die die Elektroden (4, 5) und das hygroskopische Material (3) von einem abgeschlossenen Behältnis (12) umschlossen sind, wobei das Behältnis (12) mindestens eine Fläche aufweist, die als Membran (13) ausgebildet ist und eine Diffusion von Wassermolekühlen in das Behältnis (12) zulässt.

8. Spurenfeuchtemesseinrichtung (1) nach einem der vorangegangenen Ansprüche, **dadurch gekennzeichnet, dass** die Steuereinrichtung (11) derart ausgebildet ist, einen zeitlichen Abstand zwischen zwei Polaritatswechseln umso kürzer zu wählen, je größer die gemessene Stromstärke ist.

9. Verfahren zum Messen der Spurenfeuchte umfassend die Schritte:
Anlegen einer Spannung an mindestens zwei voneinander getrennt ausgebildeten Elektroden (4, 5), die mit einem hygroskopischen Material (3) in Kontakt sind, Absorbieren von Wassermolekülen an dem hygroskopischen Material (3), elektrolytisches Dissoziieren der absorbierten Wassermoleküle durch Anlegen einer Spannung,
Messen des aufgrund der elektrolytischen Dissoziation verursachten elektrischen Stroms, wobei die gemessene Stromstärke ein Maß für die gemessene Spurenfeuchte ist,
wobei eine Polarität der an die Elektroden (4, 5) angelegten Spannung zeitlich variiert wird,
**dadurch gekennzeichnet, dass**
die Polarität abhängig von der gemessenen Stromstärke zeitlich variiert wird.

10. Verfahren nach Anspruch 9, **dadurch gekennzeichnet, dass** die Polarität zeitlich periodisch variiert wird, wobei die Dauer einer periodischen Variation als Periodenlänge bezeichnet ist.

11. Verfahren nach Anspruch 10, **dadurch gekennzeichnet, dass** die Polarität periodisch variiert wird, so dass eine halbe Periodenlänge größer als eine maximale Einschwingzeit der Strommessung bei konstanter Spurenfeuchte ist.

12. Verfahren nach einem der Ansprüche 10 bis 11, **dadurch gekennzeichnet, dass** die Polarität so variiert wird, dass die Periodenlänge im Bereich von 1s bis 1 Tag liegt.

13. Verfahren nach einem der Ansprüche 10 bis 12, **dadurch gekennzeichnet, dass** die Polarität so variiert wird, dass die Periodenlänge im Bereich von 1 Minute bis 1 Stunde liegt.

14. Verfahren nach einem der Ansprüche 9 bis 13, **dadurch gekennzeichnet, dass** ein zeitlicher Abstand zwischen zwei Polaritatswechseln kürzer gewählt wird, je größer die gemessene Stromstärke ist.

15. Verfahren nach einem der Ansprüche 9 bis 14, **dadurch gekennzeichnet, dass** die Wassermoleküle vor dem Absorbieren an dem hygroskopischen Material (3) durch eine Membran (13) diffundiert werden, die eine Fläche eines abgeschlossenen Behältnisses (12) ist, welches die Elektroden (4, 5) und das hygroskopische Material (3) umschließt.

## Claims

1. Trace moisture measuring device (1) comprising:
a voltage source (9),
a trace moisture sensor (2), which comprises at least two electrodes (4, 5) which are arranged separated from one another and which are in contact with a hygroscopic material (3), a current measuring device (8), a polarity changing device (10) connected to the voltage source (9), by means of which in each case a polarity of the voltage applied at the electrodes (4, 5) can be temporally varied or is varied, and a control device,
wherein the at least two electrodes (4, 5) of the trace moisture sensor (2) are connected to the voltage source (9) in order to apply a voltage between the two electrodes (4, 5) such that an electrical potential builds up in the hygroscopic material (3), and water molecules absorbed at the hygroscopic material (3) are electrolytically dissociated and thereby close a current circuit, wherein the current measuring device (8) is arranged in the current circuit such as to measure the electrical current generated by the electrolytic dissociation, **characterised in that**
the control device (11) is configured such as to control the polarity changing device (10) in such a way that the polarity is temporally varied depending on the current measured.

2. Trace moisture measuring device (1) according to claim 1, **characterised in that** the control device is configured such as to vary the polarity periodically, wherein the duration of a period of the periodic variation is designated as a period length.

3. Trace moisture measuring device (1) according to claim 2, **characterised in that** half a period length is greater than a maximum settling time of the current measuring device (8) at constant trace moisture.

4. Trace moisture measuring device (1) according to any one of the preceding claims 2 or 3, **characterised in that** the period length lies in the range from 1 s to 1 day.

5. Trace moisture measuring device (1) according to any one of the preceding claims 2 to 4, **characterised in that** the period length lies in the range from 1 minute to 1 hour.

6. Trace moisture measuring device (1) according to any one of the preceding claims 2 to 5, **characterised in that** the period length lies in the range from 5 minutes to 20 minutes.

7. Trace moisture measuring device (1) according to any one of the preceding claims, **characterised in that** the electrodes (4, 5) and the hygroscopic material (3) are enclosed by a closed container (12), wherein the container (12) comprises at least one surface, which is configured as a membrane (13) and allows for a diffusion of water molecules into the container (12).

8. Trace moisture measuring device (1) according to any one of the preceding claims, **characterised in that** the control device (11) is configured in such a way as to select a temporal gap between two polarity changes the shorter, the greater the measured current is.

9. Method for measuring the trace moisture, comprising the steps:
applying a voltage on at least two electrodes (4, 5) configured such as to be separated from one another and which are in contact with a hygroscopic material (3);
absorbing water molecules at the hygroscopic material (3),
electrolytic dissociating of the absorbed water molecules by applying a voltage,
measuring the electrical current caused by the electrolytic dissociation, wherein the measured current is a measure for the measured trace moisture, wherein a polarity of the voltage applied at the electrodes (4, 5) is temporally varied,
**characterised in that**
the polarity is temporally varied depending on the current measured.

10. Method according to claim 9, **characterised in that** the polarity is periodically varied, wherein the duration of a periodic variation is designated as the period length.

11. Method according to claim 10, **characterised in that** the polarity is periodically varied, such that half a period length is greater than a maximum settling time of the current measurement at constant trace moisture.

12. Method according to any one of claims 10 to 11, **characterised in that** the polarity is varied in such a way that the period length lies in the range from 1 s to 1 day.

13. Method according to any one of claims 10 to 12, **characterised in that** the polarity is varied in such a way that the period length lies in the range from 1 minute to 1 hour.

14. Method according to any one of claims 9 to 13, **characterised in that** a temporal gap between two polarity changes is selected the shorter the greater the measured current is.

15. Method according to one of claims 9 to 14, **characterised in that**, before the absorbing at the hygroscopic material (3), the water molecules are diffused through a membrane (13), which is a surface of a closed container (12) which encloses the electrodes (4, 5) and the hygroscopic material (3).

## Revendications

1. Système de mesure de traces d'humidité (1) comprenant :
une source de tension (9),
un capteur de traces d'humidité (2), qui comprend au moins deux électrodes (4, 5) réalisées de manière séparée les unes des autres, lesquelles sont en contact avec un matériau (3) hygroscopique, un système de mesure de courant (8), un système de changement de polarité (10) relié à la source de tension (9), par l'intermédiaire duquel la polarité, respectivement, de la tension appliquée au niveau des électrodes (4, 5) peut être variée ou est variée dans le temps, et un système de commande (11),
dans lequel les au moins deux électrodes (4, 5) du capteur de traces d'humidité (2) sont reliées à la source de tension (9) afin d'appliquer une tension entre les deux électrodes (4, 5) de sorte qu'un potentiel électrique s'établit dans le matériau (3) hygroscopique et que des molécules d'eau absorbées au niveau du matériau (3) hygroscopique sont dissociées par voie électrolytique, et ferment par cet intermédiaire un circuit de courant, dans lequel le système de mesure de courant (8) servant à mesurer le courant électrique provoqué par la dissociation électrolytique est disposé dans le circuit de courant,
**caractérisé en ce que**
le système de commande (11) est réalisé afin de commander le système de changement de polarité (10) de telle manière que la polarité varie dans le temps en fonction de l'intensité du courant mesurée.

2. Système de mesure de traces d'humidité (1) selon la revendication 1, **caractérisé en ce que** le système de commande est réalisé pour faire varier dans le temps la polarité, dans lequel une durée d'une période de la variation périodique est désignée par longueur de période.

3. Système de mesure de traces d'humidité (1) selon la revendication 2, **caractérisé en ce que** la demi-longueur de période est plus grande qu'un temps de stabilisation maximal du système de mesure de courant (8) en présence de traces d'humidité constantes.

4. Système de mesure de traces d'humidité (1) selon l'une quelconque des revendications 2 ou 3 précédentes, **caractérisé en ce que** la longueur de période se situe dans la plage allant de 1 s à 1 jour.

5. Système de mesure de traces d'humidité (1) selon l'une quelconque des revendications 2 à 4 précédentes, **caractérisé en ce que** la longueur de période se situe dans la plage allant de 1 minute à 1 heure.

6. Système de mesure de traces d'humidité (1) selon l'une quelconque des revendications 2 à 5 précédentes, **caractérisé en ce que** la longueur de période se situe dans la plage allant de 5 minutes à 20 minutes.

7. Système de mesure de traces d'humidité (1) selon l'une quelconque des revendications précédentes, **caractérisé en ce que** les électrodes (4, 5) et le matériau (3) hygroscopique sont renfermés par un récipient (12) fermé hermétiquement, dans lequel le récipient (12) présente au moins une surface, qui est réalisée sous la forme d'une membrane (13) et qui permet une diffusion de molécules d'eau dans le récipient (12).

8. Système de mesure de traces d'humidité (1) selon l'une quelconque des revendications précédentes, **caractérisé en ce que** le système de commande (11) est réalisé de manière à choisir un espacement dans le temps entre deux changements de polarités d'autant plus court que l'intensité mesurée est grande.

9. Procédé servant à mesurer les traces d'humidité, comprenant les étapes suivantes consistant à :
appliquer une tension au niveau au moins de deux électrodes (4, 5) réalisées de manière séparée les unes des autres, lesquelles sont en contact avec un matériau (3) hygroscopique,
absorber des molécules d'eau au niveau du matériau (3) hygroscopique,
dissocier par voie électrolytique les molécules d'eau absorbées en appliquant une tension,
mesurer le courant électrique provoqué du fait de la dissociation électrolytique, dans lequel l'intensité de courant mesurée est une grandeur pour les traces d'humidité mesurée,
dans lequel une polarité de la tension appliquée au niveau des électrodes (4, 5) est variée dans le temps,
**caractérisé en ce que**
la polarité est variée dans le temps en fonction de l'intensité de courant mesurée.

10. Procédé selon la revendication 9, **caractérisé en ce que** la polarité est variée dans le temps de manière périodique, dans lequel la durée d'une variation périodique est désignée par longueur de période.

11. Procédé selon la revendication 10, **caractérisé en ce que** la polarité est variée de manière périodique de sorte qu'une demi-longueur de période est plus grande qu'un temps de stabilisation maximal de la mesure de courant en présence de traces d'humidité constantes.

12. Procédé selon l'une quelconque des revendications 10 à 11, **caractérisé en ce que** la polarité est variée de telle sorte que la longueur de période se situe dans la plage allant de 1 s à 1 jour.

13. Procédé selon l'une quelconque des revendications 10 à 12, **caractérisé en ce que** la polarité est variée de telle sorte que la longueur de période se situe dans la plage allant de 1 minute à 1 heure.

14. Procédé selon l'une quelconque des revendications 9 à 13, **caractérisé en ce qu'**un espacement dans le temps entre deux changements de polarité est choisi d'autant plus court que l'intensité de courant mesurée est grande.

15. Procédé selon l'une quelconque des revendications 9 à 14, **caractérisé en ce que** les molécules d'eau sont diffusées à travers une membrane (13) avant l'absorption au niveau du matériau (3) hygroscopique, laquelle membrane est une surface d'un récipient (12) fermé hermétiquement, lequel renferme les électrodes (4, 5) et le matériau (3) hygroscopique.
